# EUROPEAN PATENT SPECIFICATION

(11) **EP 1 295 693 B1**
(45) Date of publication and mention of the grant of the patent: **18.11.2009**
(21) Application number: 01203614.1
(22) Date of filing: 21.09.2001
(51) Int. Cl.: B29C 45/20

(54) **Injection moulding device with detachable nozzle tip**
Spritzgiessvorrichtung mit lösbaren Düsenspitze
Dispositif de moulage par injection avec buse amovible

(43) Date of publication of application: 26.03.2003
(73) Proprietor: Synventive Molding Solutions B.V., 3295 ZJ 's-Gravendeel (NL)
(72) Inventor: Sattler, Peter, 64673 Zwingenberg (DE); Liebram, Udo, 64319 Pfungstadt (DE)
(74) Representative: Fuchs

(56) References cited:
- DE-A- 2 835 805
- GB-A- 1 075 882
- US-A- 4 389 002

## Description

The invention relates to an injection moulding device comprising a heated forward nozzle part, a nozzle tip which is provided with a screw thread and inserted into the forward nozzle part, the nozzle tip comprising a first part having a screw thread and an annular compensation bushing around the first part, the compensation bushing having an internal screw thread engaging the screw thread of the first nozzle part and an outer screw thread engaging the screw thread on the forward nozzle part.

The invention also relates to a method of orienting a nozzle tip. Injection moulding devices are generally known in the prior art in which the heated forward end of the nozzle, which conveys molten thermoplastic material to a mould cavity, is provided with a nozzle tip in the form of a screw insert. Using a standard heated nozzle, the nozzle tip can be rapidly released therefrom and exchanged in order to use different nozzle tip or in accordance with varying injection moulding settings, in for instance the shape of the object formed in the mould cavity. In order to obtain an optimal heat input into the nozzle tip from the heated nozzle part and to obtain small constructional dimensions, the nozzle tip is screwed into the end part. The screw inserts have as a disadvantage that in case the nozzle tip has a curved surface, adapted to the contour of the injection mould, after demounting the nozzle tip generally a change in angular position occurs when the nozzle tip is replaced at the same rotational torque. This results in a misalignment with respect to the mould contour of the screw insert, which may cause leakage of molten thermoplastic material along the mould.

An injection moulding device according to the preamble of claim 1 is known from DE-A-28 35 805. In this document an injection moulding nozzle is described which can be fixed at the required torque for a leakage-tight connection under high injection pressures, but which can be easily released in view of the inner and router bushings. The release bushing has an outer screw thread with a relatively coarse pitch for easy release and an inner screw threat with a relatively fine thread for applying a high closing pressure.

It is an object of the present invention to provide a nozzle tip of the above-mentioned type which can be accurately oriented.

Thereto, the injection moulding device according to the present invention is characterised in that the compensation bushing comprises blocking means for blocking rotation of the compensation bushing around the first nozzle part.

By use of the external compensation bushing, the nozzle tip can be inserted into the forward nozzle end at a defined position at a predetermined rotational torque. In this situation, the compensation bushing is fixed in rotation with respect to the inner nozzle part via the blocking means. At this position the forward end of the nozzle can be adapted to the curvature of the injection mould. When the nozzle tip needs to be removed from the forward nozzle end and replaced, the exact alignment can be obtained in the following manner. Prior to removal of the nozzle tip, the rotational position of the nozzle tip with respect to the forward end is determined and indicated. Upon replacement of the nozzle tip, the compensation bushing is fixed in rotation and the nozzle tip is inserted with a predetermined rotational torque. This will result in a new position of the nozzle tip which is readjusted by unblocking the compensation bushing and change of the rotational position of the inner nozzle part with respect to the compensation bushing followed by tightening the compensation bushing again at the required rotational torque. This results in obtaining the proper alignment of the nozzle tip while at the same time maintaining the predetermined rotational torque clamping the nozzle tip into the forward nozzle end with the required force for good heat conduction. Hereafter, it is optional to fix the rotational position of the compensation bushing again for instance via a locking pawl or screw.

For a fine adjustment, it is preferred that the internal screw thread of the compensation bushing is finer than the external screw thread of the compensation bushing which engages with the forward nozzle end.

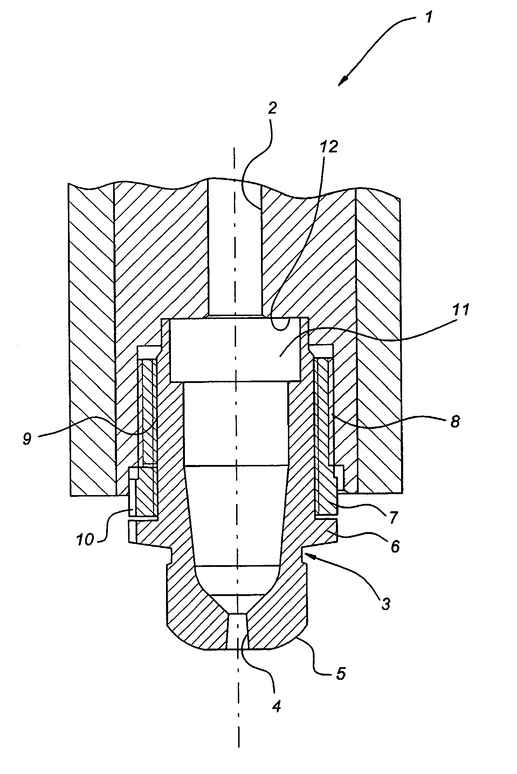

The invention will be explained in detail with reference to the accompanying sole drawing. In the drawing:
Reference numeral 1 indicates the heated forward nozzle part with an injection channel 2 connected to a nozzle tip 3. The nozzle tip 3 comprises a bore 4 which connects to a mould cavity (not shown). The forward end of the nozzle tip 3 may be provided with a curved contour 5. The nozzle tip 3 comprises an inner part 6 and a compensation bushing 7. The compensation bushing 7 comprises an external screw thread 8 which engages with a screw thread on the forward nozzle part 1. An internal screw thread 9 of the compensation bushing 7 engages with a screw thread on the inner part 6. The compensation bushing 7 and the inner part 6 are provided with blocking means 10 which may comprise a bore in the first part 6 through which a screw may be inserted to engage the compensation bushing 7 to fix its rotational position around the inner part 6. At the rear end 11 the inner part 6 projects in the axial direction beyond the compensation bushing 7 and engages with a shoulder 12 on the forward nozzle part 1.

Upon insertion, the compensation bushing 7 is screwed onto the inner part 6 and is fixed in rotation via the blocking means 10. The unitary structure is then inserted into forward end 1 such that the external screw thread 8 on the compensation bushing engages with the complementary screw thread on the forward nozzle part 1. When the rear part 11 engages the shoulder 12 of the forward nozzle part 1, rotation of the nozzle tip 3 is continued until a predetermined rotational torque is reached. At this position, the contour 5 may be provided at the forward nozzle tip part to match with the contour of the mould cavity. When the nozzle tip 3 needs to be disconnected and thereafter reinserted or replaced, an exact alignment is necessary while maintaining the predetermined rotational torque. To maintain the exact alignment prior to removal of the nozzle tip 3, its position with respect to the forward nozzle part 1 is marked. When the nozzle tip 3 is replaced and the predetermined rotational torque is obtained, a new nozzle orientation is obtained. When the internal part 6 is now rotated with respect to the compensation bushing 7, the alignment of the internal nozzle tip part 6 with respect to the mould cavity can be achieved while the predetermined rotational torque can be maintained.

## Claims

1. Injection moulding device comprising a heated forward nozzle part (1), a nozzle tip (3) which is provided with a screw thread (8) and inserted into the forward nozzle part (1), the nozzle tip comprising a first part (6) having a screw thread and an annular compensation bushing (7) around the first part, the compensation bushing having an internal screw thread (9) engaging the screw thread of the first nozzle part (6) and an outer screw thread (8) engaging the screw thread on the forward nozzle part (1), **characterized in that** the compensation bushing comprises blocking means (10) for blocking rotation of the compensation bushing (7) around the first nozzle part (6).

2. Injection moulding device according to claim 1, wherein a rear part (11) of the first nozzle part (6) projects, in the axial direction, beyond the compensation bushing (7), and engages with a shoulder (12) on the forward nozzle part (1).

3. Injection moulding device according to any of the preceding claims, wherein the internal screw thread (9) of the compensation bushing (7) is finer than the external screw thread (8).

4. Method of placing a nozzle tip (3) in a heated forward nozzle part (1) of an injection moulding device, the nozzle tip comprising a first part (6) having a screw thread and an annular compensation bushing (7) around the first part, the compensation bushing having an internal screw thread (9) engaging the screw thread of the first nozzle part and an outer screw thread (8) engaging the screw thread on the forward nozzle part, the method comprising the steps of:
a. fixing the rotational position of the compensation bushing (7) on the first nozzle part (6) via a blocking means (10) comprised in the compensation bushing;
b. fixing the nozzle tip (3) into the forward nozzle part (1) with a predetermined rotational torque;
c. releasing the blocking means (10);
d. adjusting the position of the first nozzle part (6) by rotation of said part with respect to the compensation bushing (7) to a predetermined orientation; and
e. adjusting the rotational torque.

5. Method according to claim 4, wherein prior to carrying out step c.,
- the nozzle tip (3) is provided with a curved contour;
- the orientation of the nozzle tip (3) with respect to the forward nozzle part (1) is determined.

## Patentansprüche

1. Spritzgießvorrichtung umfassend ein erwärmtes vorderes Düsenteil (1), eine mit einem Schraubgewinde versehene Düsenspitze (3), welche in das vordere Düsenteil (1) eingefügt ist, bei welcher die Düsenspitze ein erstes Teil (6) mit einem Schraubgewinde und einer ringförmigen Ausgleichshülse (7) um das erste Teil enthält, bei welcher die Ausgleichshülse ein internes Schraubgewinde (9) enthält, welches das Schraubgewinde des ersten Düsenteils (6) und ein externes Schraubgewinde (8), welches mit dem Schraubgewinde auf der vorderen Düsenseite (1) in Eingriff steht, miteinander in Eingriff bringt, **dadurch gekennzeichnet, dass** die Ausgleichshülse Blockiermittel (10) zum Blockieren von Rotation der Ausgleichshülse (7) um das erste Düsenteil (6) umfasst.

2. Spritzgießvorrichtung nach Anspruch 1, bei welcher ein hinteres Teil (11) des ersten Düsenteils (6) in axialer Richtung über die Ausgleichshülse (7) heraustritt, und mit einem Streifen (12) in das vordere Düsenteil (1) eingreift.

3. Spritzgießvorrichtung nach einem der vorhergehenden Ansprüche, bei welcher das interne Schraubgewinde (9) der Ausgleichshülse feiner ist als das externe Schraubgewinde (8).

4. Verfahren zum Einbringen einer Düsenspitze (3) in ein erwärmtes vorderes Düsenteil (1) einer Spritzgießvorrichtung, bei welchem die Düsenspitze einen ersten Teil (6) mit einem Schraubgewinde und einer ringförmigen Ausgleichshülse (7) um das erste Teil enthält, bei welcher die Ausgleichshülse ein internes Schraubgewinde (9) enthält, welches das Schraubgewinde des ersten Düsenteils (6) und ein externes Schraubgewinde (8), welches mit dem Schraubgewinde auf der vorderen Düsenseite (1) in Eingriff steht, miteinander in Eingriff bringt, welches folgende Schritte umfasst:
a. Befestigen der Drehstellung der Ausgleichshülse (7) auf dem ersten Düsenteil (6) mittels eines Blockiermittels (10), welches in der Ausgleichshülse enthalten ist;
b. Befestigen einer Düsenspitze (3) in dem vorderen Düsenteil (1) zu einem vorbestimmten Drehmoment;
c. Entriegeln des Blockiermittels (10);
d. Einstellen der Stellung des ersten Düsenteils (6) durch Drehung dieses Teils mit Bezug auf die Ausgleichshülse (7) in eine vorbestimmte Richtung; und
e. Einstellen des Drehmoments.

5. Verfahren nach Anspruch 4, bei welchem vor Ausführen des Schrittes c
- die Düsenspitze (3) einen kurvigen Umriss hat;
- die Richtung der Düsenspitze (3) mit Bezug auf den vorderen Düsenteil (1) bestimmt ist.

## Revendications

1. Dispositif de moulage par injection comprenant une partie de buse avant chauffée (1), une pointe de buse (3) qui est pourvue d'un filetage (8) et insérée dans la partie de buse avant (1), la pointe de buse comprenant une première partie (6) comportant un filetage et une douille de compensation annulaire (7) autour de la première partie, la douille de compensation comportant un filetage interne (9) entrant en prise avec le filetage de la première partie de buse (6) et un filetage externe (8) entrant en prise avec le filetage sur la partie de buse avant (1), **caractérisé en ce que** la douille de compensation comprend des moyens de blocage (10) destinés à bloquer la rotation de la douille de compensation (7) autour de la première partie de buse (6).

2. Dispositif de moulage par injection selon la revendication 1, dans lequel une partie arrière (11) de la première partie de buse (6) fait saillie, dans la direction axiale, au-delà de la douille de compensation (7), et entre en prise avec un épaulement (12) sur la partie de buse avant (1).

3. Dispositif de moulage par injection selon une quelconque des revendications précédentes, dans lequel le filetage interne (9) de la douille de compensation (7) est plus fin que le filetage externe (8).

4. Procédé pour positionner une pointe de buse (3) dans une partie de buse avant chauffée (1) d'un dispositif de moulage par injection, la pointe de buse comprenant une première partie (6) comportant un filetage et une douille de compensation annulaire (7) autour de la première partie, la douille de compensation comportant un filetage interne (9) entrant en prise avec le filetage de la première partie de buse et un filetage externe (8) entrant en prise avec le filetage sur la partie de buse avant, le procédé comprenant les étapes consistant à :
a. fixer la position de rotation de la douille de compensation (7) sur la première partie de buse (6) par l'intermédiaire de moyens de blocage (10) compris dans la douille de compensation ;
b. fixer la pointe de buse (3) dans la partie de buse avant (1) avec un couple de rotation prédéterminé ;
c. relâcher les moyens de blocage (10) ;
d. régler la position de la première partie de buse (6) grâce à la rotation de ladite partie par rapport à la douille de compensation (7) dans une orientation prédéterminée ; et
e. régler le couple de rotation.

5. Procédé selon la revendication 4, dans lequel, avant de réaliser l'étape c.,
- la pointe de buse (3) est pourvue d'un contour incurvé ;
- l'orientation de la pointe de buse (3) par rapport à la partie de buse avant (1) est déterminée.
